# FASCICULE DE BREVET EUROPEEN

(11) **EP 3 815 225 B1**
(45) Date de publication et mention de la délivrance du brevet: **28.10.2026**
(21) Numéro de dépôt: 19732701.8
(22) Date de dépôt: 27.06.2019
(51) Int. Cl.: H02K 29/08, H02P 6/06, G01D 5/14, G01P 13/04

(54) **MOTEUR ELECTRIQUE A COURANT CONTINU SANS BALAI ET PROCEDE DE COMMANDE ASSOCIE**
BÜRSTENLOSER GLEICHSTROMMOTOR UND DAZUGEHÖRIGES STEUERVERFAHREN
BRUSHLESS DC MOTOR AND ASSOCIATED COMMAND METHOD

(30) Priorité: 29.06.2018 FR 1856030
(43) Date de publication de la demande: 05.05.2021
(73) Titulaire: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Visibility
(86) Numéro de dépôt international: PCT/EP2019/067247
(87) Numéro de publication internationale: WO 2020/002553

(56) Documents cités:
- EP-A2- 2 123 522
- DE-U1- 29 901 686
- US-A1- 2009 302 793
- ANDREJ SIKORA ET AL: "Impact of hall sensors positioning on symmetry of BLDC control signals", 19 July 2012 (2012-07-19), XP055555556, Retrieved from the Internet <URL:https://ieeexplore.ieee.org/ielx5/6253398/6264368/06264444.pdf?tp=&arnumber=6264444&isnumber=6264368> [retrieved on 20190212]

## Description

La présente invention concerne un moteur électrique à courant continu sans balai destiné notamment à des équipements de véhicule automobile.

De nombreux moteurs électriques à courant continu sans balais sont utilisés dans les équipements de véhicules automobiles notamment dans les motoréducteurs des dispositifs d'essuyage.

Les moteurs électriques à courant continu sans balai peuvent présenter de nombreux avantages comme une grande durée de vie, un encombrement et une consommation réduits.

Cependant, la commande des moteurs électriques est plus complexe par rapport aux moteurs électriques à balais car pour permettre un bon fonctionnement il est nécessaire de connaître précisément la position angulaire du rotor du moteur électrique à courant continu sans balai. En effet, de tels moteurs électriques comprennent des bobines d'excitation électromagnétique disposées au niveau du stator et alimentées alternativement via un onduleur pour permettre l'entraînement d'aimants permanents disposés sur le rotor.

Or, afin de pouvoir commuter les interrupteurs de l'onduleur et donc l'alimentation des bobines électromagnétiques à des instants optimaux pour obtenir l'entraînement désiré du rotor, il convient de connaître la position du rotor au moins par secteurs avec quelques points précis lors de la commutation d'état (en général pour une excitation trapézoïdale, six commutations à chaque tour du rotor).

Pour cela il est connu d'utiliser des capteurs à effet Hall, par exemple trois disposés à 120° pour détecter les six points précis correspondant aux commutations.

Pour un moteur six pôles, il existe aussi un montage avec deux capteurs à effet Hall rapprochés, les deux capteurs à effet Hall devant être positionnés avec un angle de 10° par rapport au centre d'un aimant de commande pour permettre une détection rapide du sens de rotation. Toutefois, un tel montage n'est souvent pas possible du fait de la taille des capteurs disponibles dans le commerce dont l'encombrement empêche d'obtenir l'angle désiré, notamment lorsque l'aimant de commande est de taille réduite.

Les documents US 2009/0302793 A1, DE 299 01 686 U1 et EP 2 123 522 A2, ainsi que la publication intitulée « Impact of Hall Sensors Positioning on Symmetry of BLDC Control Signals » de Sikora et al. (XP055555556) illustre d'autres moteurs électriques à courant continu sans balai tels que connu dans l'état de la technique.

Il convient donc de trouver une solution permettant de réaliser un moteur électrique à courant continu sans balai présentant un encombrement réduit pour un coût limité.

A cet effet, la présente invention concerne un moteur électrique à courant continu sans balais selon la revendication 1.

Le moteur électrique selon la présente invention peut également comprendre les aspects suivants :
- l'angle entre les droites passant par le centre de l'aimant de commande et respectivement le premier capteur à effet Hall et le deuxième capteur à effet Hall est inférieur à 19°.
- l'angle entre les droites passant par le centre de l'aimant de commande et respectivement le premier capteur à effet Hall et le deuxième capteur à effet Hall est sensiblement égal à 16°.

La présente invention concerne également un motoréducteur, notamment pour dispositif d'essuyage, comprenant :
- un moteur électrique tel que décrit précédemment.

La présente invention concerne également un procédé de commande d'un moteur électrique à courant continu sans balai selon la revendication 5.

D'autres caractéristiques et avantages de l'invention ressortiront de la description suivante, donnée à titre d'exemple et sans caractère limitatif, en regard des dessins annexés sur lesquels :
- la figure 1 représente un schéma d'une partie d'un moteur électrique à aimant intégrés (ou encore encastrés ou enterrés) selon la présente invention,
- La figure 2 représente un schéma d'un circuit d'alimentation d'un moteur électrique,
- la figure 3 représente un schéma des capteurs à effet Hall et de l'aimant de commande associé,
- la figure 4 représente un schéma des signaux issus des capteurs à effet Hall selon une première configuration,
- la figure 5 représente un schéma des signaux issus des capteurs à effet Hall selon une deuxième configuration,
- la figure 6 représente un organigramme des étapes d'un procédé de commande d'un moteur électrique selon la présente invention.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

La présente invention concerne un moteur électrique à courant continu sans balais, par exemple un moteur électrique utilisé dans des équipements de véhicules automobiles comme les motoréducteurs des dispositifs d'essuyage. La présente invention concerne également un tel motoréducteur.

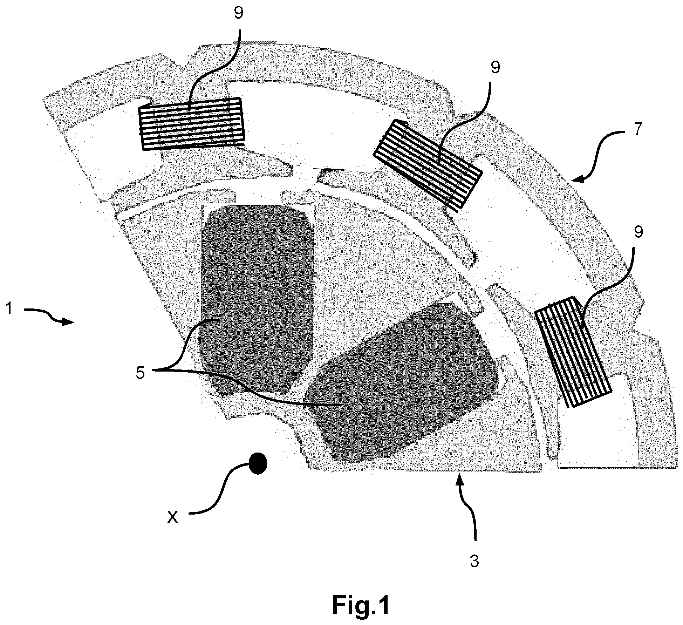

La figure 1 représente une vue schématique partielle d'un moteur électrique comprenant un rotor 3 monté de manière rotative autour d'un axe de rotation X et comprenant une pluralité de pôles. Ces pôles sont par exemple réalisés par des aimants permanents 5 répartis autour de l'axe de rotation X du rotor 3 et configurés pour former une alternance de pôles nord et sud.

Le moteur électrique comprend également un stator 7 comprenant une pluralité de bobines d'excitation électromagnétique 9 formant les phases du moteur électrique et dont l'alimentation permet d'entraîner le rotor 3 en rotation via l'interaction entre les bobines d'excitation électromagnétique 9 et les pôles du rotor 3.

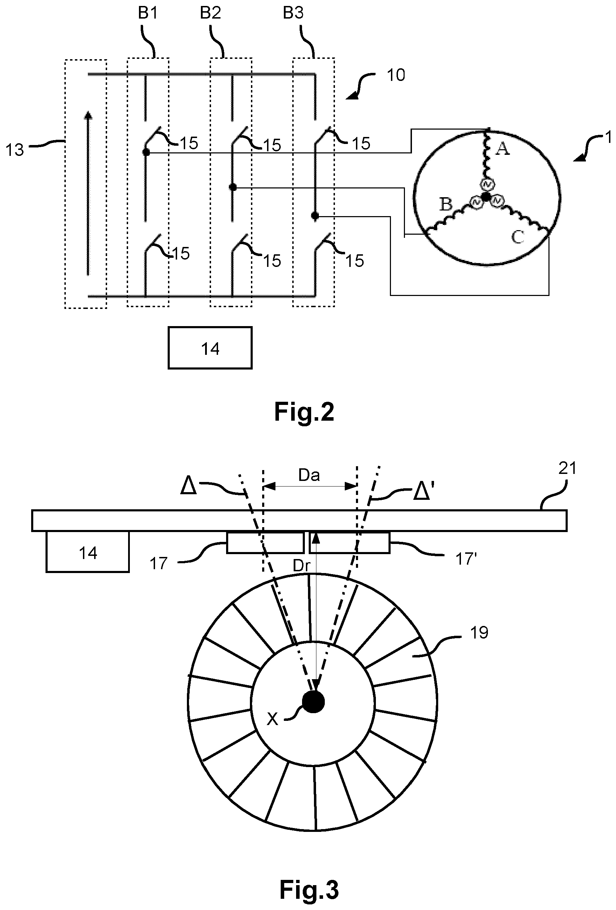

La figure 2 représente un schéma d'un exemple de circuit d'alimentation des phases d'un moteur électrique 1. Dans le cas présent, le moteur électrique 1 comprend trois phases notées A, B et C disposées en triangle et reliées à un point milieu. Le circuit d'alimentation comprend un onduleur 10. L'onduleur 10 comprend trois branches B1, B2 et B3 disposées en parallèle et reliées aux bornes d'une source de tension 13. Chaque branche B1, B2, B3 comprend deux interrupteurs 15 disposés en série. L'ouverture et la fermeture des interrupteurs 15 sont pilotées par une unité de commande 14 correspondant par exemple à un microcontrôleur ou un microprocesseur. Les points milieux des branches B1, B2 et B3 sont reliées respectivement aux phases A, B et C du moteur électrique 1.

Cependant, pour permettre à l'unité de commande 14 de commuter l'ouverture et la fermeture des interrupteurs 15 de manière optimale pour permettre la mise en rotation du rotor 3 dans le sens de rotation désiré et à la vitesse désirée, il convient de connaître de manière précise la position du rotor 3 tous les 60° électriques.

Pour cela, comme représenté sur la figure 3, un premier capteur à effet Hall 17 est couplé à un aimant de commande 19 comprenant un nombre de pôles égal à trois fois le nombre de pôles du moteur électrique 1, par exemple dix-huit pôles pour un moteur électrique 1 comprenant six pôles, de sorte que les changements d'état du capteur à effet Hall 17 (passage d'un niveau haut à un niveau bas ou inversement) surviennent tous les 60° électriques (soit 20° pour un moteur électrique a six pôles).

Pour déterminer le sens de rotation du rotor 3 au moment du démarrage, un deuxième capteur à effet Hall 17' est également utilisé. Ce deuxième capteur à effet Hall 17' est par exemple couplé au même aimant de commande 19 que le premier capteur à effet Hall 17.

De plus, afin de réduire le coût et l'encombrement du moteur électrique 1, il convient d'intégrer le premier capteur à effet Hall 17 et le deuxième capteur à effet Hall 17' sur un circuit imprimé 21 ce qui limite les possibilités de positionnement des capteurs à effet Hall 17, 17' par rapport à l'aimant de commande 19.

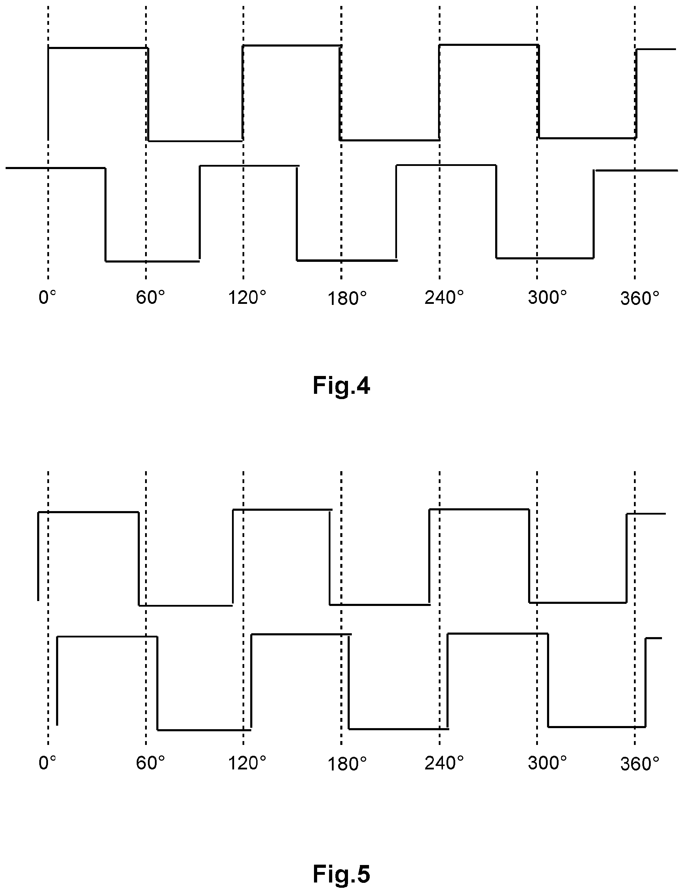

Dans le cas d'un moteur électrique 1 comprenant six pôles, c'est-à-dire trois paires de pôles, les commutations de l'onduleur 10 doivent se produire tous les 20°. Ainsi, afin de détecter le sens de rotation du rotor 3 au démarrage, le deuxième capteur à effet Hall 17' doit être positionné de sorte que les droites Δ et Δ' perpendiculaires à l'axe de rotation X et passant respectivement par le centre du premier capteur à effet Hall 17 et le centre du deuxième capteur à effet Hall 17' forment un angle de 10°. Cela implique que la distance Da séparant les centres des deux capteurs à effet Hall 17 et 17' est donnée par l'équation suivante :$Da = 2 * Dr * tan \left(10/2\right)$ avec Dr la distance entre l'axe de rotation X de l'aimant de commande 19 et le circuit imprimé 21. De plus, il faut aussi tenir compte de la taille du boîtier de protection des capteurs 17 et 17'. Les boîtiers sont par exemple de forme parallélépipédique et le capteur à effet Hall est situé au centre du parallélépipède. La largeur du boîtier est par exemple comprise entre 2 et 3 mm et la hauteur du boîtier est par exemple comprise entre 1,5 et 2,5mm. Ainsi, il est possible de déterminer la distance par laquelle doivent être séparés les deux capteurs à effet Hall 17 et 17' pour respecter un angle de 10°. Or, si cette distance est inférieure à la largeur du boîtier, ce qui est le cas lorsque l'on utilise un aimant de commande 19 de faible diamètre, l'angle de 10° ne peut être respecté. Afin de ne pas avoir à augmenter le diamètre de l'aimant de commande 19 et donc augmenter l'encombrement global du moteur électrique 1, les deux capteurs 17 et 17' sont disposés sur le circuit imprimé 21 le plus proche l'un de l'autre et le traitement des signaux est adapté en fonction de l'angle obtenu entre les deux droites Δ et Δ' passant par le centre l'aimant de commande 19 et respectivement les centres du premier capteur à effet Hall 17 et du deuxième capteur à effet Hall 17'. Cet angle est donc dans cet exemple supérieur à 10°, par exemple 14°. Dans ce cas, les capteurs à effet Hall 17, 17' et l'aimant de commande 19 sont configurés de manière à obtenir un signal en avance de phase comme décrit ci-après à partir de la figure 5.

La figure 4 représente les signaux obtenus par le premier capteur à effet Hall 17 et le deuxième capteur à effet Hall 17' dans le cas où les capteurs 17 et 17' sont positionnés de sorte que l'angle entre les deux droites Δ et Δ' passant par le centre l'aimant de commande 19 et respectivement le premier capteur à effet Hall 17 et le deuxième capteur à effet Hall 17' soit égal à 10°. Les changements d'état du premier capteur à effet Hall 17 correspondent aux instants de commutation et les changements d'état du deuxième capteur à effet Hall 17' s'opèrent à intervalles de durée égaux des changements d'état du premier capteur à effet Hall 17 lorsque le rotor 3 tourne à vitesse constante. Le deuxième capteur à effet Hall 17' est utilisé en combinaison du premier capteur à effet Hall 17 pour déterminer le sens de rotation du rotor 3. Avantageusement, on peut aussi réaliser des commutations intermédiaires pour générer des pas plus faibles et réduire davantage le bruit généré par le moteur.

Dans le cas où l'angle entre les deux droites Δ et Δ' passant par le centre l'aimant de commande 19 et respectivement le premier capteur à effet Hall 17 et le deuxième capteur à effet Hall 17' est supérieur ou égal à 10°, par exemple 14°, les capteurs à effet Hall 17 et 17' et l'aimant de commande 19 sont configurés de manière à ce que les changements d'état des capteurs à effet Hall 17 et 17' surviennent avec une avance par rapport à l'instant de commutation qui soit égale pour les deux capteurs à effet Hall 17 et 17', l'un étant en avance dans un premier sens de rotation et l'autre en avance dans le deuxième sens de rotation du rotor 3 comme représenté schématiquement sur la figure 5. Ainsi, dans cette configuration, le signal utilisé pour déterminer les instants de commutation est soit le signal issu du premier capteur à effet Hall 17 soit le signal issu du deuxième capteur à effet Hall 17' suivant le sens de rotation du rotor 3. L'autre capteur à effet Hall 17, 17', qui est en retard par rapport à l'instant de commutation, étant utilisé en combinaison du capteur à effet Hall 17, 17' utilisé pour déterminer les instants de commutation pour déterminer le sens de rotation du rotor 3.

Ainsi, une telle configuration permet d'utiliser un aimant de commande 19 de faible diamètre tout en positionnant les deux capteurs à effet Hall 17, 17' sur un circuit imprimé de manière à obtenir un moteur électrique 1 de faible encombrement. De plus, l'utilisation d'un capteur à effet Hall 17, 17' fournissant un signal en avance de phase permet d'obtenir un couple de rotation plus élevé sans nécessiter de traitement électronique des signaux transmis par les capteurs à effet Hall 17, 17'.

On observe que les deux capteurs peuvent avoir le même état ou un état différent. Des états différents indiquent que la commutation n'est pas proche, et des mêmes états indiquent que la zone de commutation est proche. Dans l'hypothèse où l'on a décalé les deux capteurs pour décaler les deux commutations, il est possible de privilégier une commutation par rapport à une autre pour déterminer le sens de rotation du moteur.

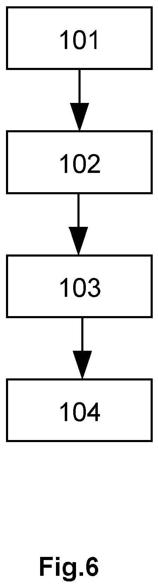

La présente invention concerne également un procédé de commande d'un moteur électrique tel que décrit précédemment. Les différentes étapes du procédé vont maintenant être décrites à partir de l'organigramme de la figure 6.

La première étape 101 concerne une étape préliminaire de détermination d'une séquence prédéterminée de signaux d'excitation à appliquer aux bobines 9 en fonction de la position du rotor 3 pour entraîner le rotor 3 en rotation. Cette détermination correspond à la détermination de la position (ouverture ou fermeture) des interrupteurs 15 de l'onduleur 10 permettant l'alimentation des bobines 9 en fonction de la position angulaire du rotor 3.

La deuxième étape 102 correspond à la détermination des instants de commutation des signaux d'excitation à partir du signal fourni par l'un des capteurs à effet Hall 17 ou 17'. Le choix du capteur à effet Hall 17, 17' pour déterminer les instants de commutation des signaux d'excitation dépend par exemple du sens de rotation du rotor 3. Dans un tel cas, il est possible d'utiliser un capteur à effet Hall pour déterminer la position du moteur et l'autre capteur à effet Hall pour déterminer le sens de rotation du rotor.

L'étape 103 correspond à la détermination du sens de rotation du rotor 3 à partir des signaux fournis par les deux capteurs à effet Hall 17 et 17'.

L'étape 104 concerne l'application de la séquence de signaux d'excitation déterminée lors de l'étape 101 en fonction des instants de commutation déterminés de l'étape 102.

En utilisant une position des capteurs à effet Hall dans laquelle l'angle entre les deux droites Δ et Δ' passant par le centre l'aimant de commande 19 et respectivement le premier capteur à effet Hall 17 et le deuxième capteur à effet Hall 17' est supérieur ou égal à 10° telle que décrite précédemment, on obtient un signal en avance de phase conduisant à un couple de rotation plus élevé. Cette avance de phase est obtenue sans nécessiter de traitement électronique des signaux transmis par les capteurs à effet Hall 17, 17'.

## Revendications

1. Moteur électrique à courant continu sans balai (1) comprenant :
- un rotor (3) comprenant des éléments magnétiques (5) répartis autour du rotor (3) formant des pôles du moteur électrique (1) et un aimant de commande (19) comprenant un nombre de paires de pôles égal à trois fois le nombre de paires de pôles du moteur électrique (1),
- un stator (7) présentant des bobines d'excitation électromagnétique (9), et
- une unité de commande (14) configurée pour appliquer une séquence prédéterminée de signaux d'excitation aux bobines (9) en fonction de la position du rotor (3) pour entraîner le rotor (3) en rotation le moteur comprend en outre :
- seulement deux capteurs à effet Hall, dont un premier et un deuxième capteur à effet Hall, lesdits capteurs à effet Hall (17, 17') étant configurés pour détecter des positions angulaires prédéterminées du rotor, le premier capteur à effet Hall (17) et le deuxième capteur à effet hall (17') sont disposés sur un circuit imprimé (21) et sont espacés de sorte que l'angle entre les droites (Δ et Δ') passant par le centre de l'aimant de commande (19) et respectivement le premier capteur à effet Hall (17) et le deuxième capteur à effet Hall (17') est supérieur ou égal à 10° et dans lequel le premier capteur à effet Hall (17) est utilisé pour déterminer les instants de commutation des signaux d'excitation et le deuxième capteur à effet Hall (17') est utilisé, en combinaison du premier capteur à effet Hall (17), pour déterminer le sens de rotation du rotor (3) au moment du démarrage ou entre le premier capteur à effet Hall (17) et le deuxième capteur à effet Hall (17'), **caractérisé en ce que** l'aimant de commande (19) et les premier et deuxième capteurs à effet Hall (17, 17') sont configurés de manière à ce que les changements d'état de l'un et de l'autre desdits premier et deuxième capteurs à effet Hall (17, 17') se produisent respectivement avant et après l'instant de commutation des signaux d'excitation et de manière à ce que la durée entre le changement d'état de l'un des capteurs à effet Hall (17, 17') et l'instant de commutation des signaux d'excitation soit égale à la durée entre l'instant de commutation des signaux d'excitation et le changement d'état de l'autre des capteurs à effet Hall (17', 17) lorsque le rotor (3) tourne à une vitesse constante et
dans lequel le capteur à effet Hall (17, 17') en avance par rapport à l'instant de commutation est utilisé par l'unité de commande (14) pour déterminer les instants de commutation, le capteur à effet Hall (17', 17) en retard par rapport à l'instant de commutation étant utilisé, en combinaison du capteur à effet Hall (17, 17') en avance par rapport à l'instant de commutation, pour déterminer le sens de rotation du rotor (3) au moment du démarrage.

2. Moteur électrique (1) selon la revendication précédente dans lequel l'angle entre les droites (Δ et Δ') passant par le centre de l'aimant de commande (19) et respectivement le premier capteur à effet Hall (17) et le deuxième capteur à effet Hall (17') est inférieur à 19°.

3. Moteur électrique (1) selon la revendication précédente dans lequel l'angle entre les droites (Δ et Δ') passant par le centre de l'aimant de commande (19) et respectivement le premier capteur à effet Hall (17) et le deuxième capteur à effet Hall (17') est sensiblement égal à 16°.

4. Motoréducteur, notamment pour dispositif d'essuyage, comprenant :
- un moteur électrique (1) selon l'une des revendications précédentes.

5. Procédé de commande d'un moteur électrique à courant continu sans balai (1), ledit moteur électrique (1) comprenant :
- un rotor (3) comprenant des éléments magnétiques (5) répartis autour du rotor (3) formant des pôles du moteur électrique (1) et un aimant de commande (19) comprenant un nombre de paire de pôles égal à trois fois le nombre de paire de pôles du moteur électrique (1),
- un stator (7) présentant des bobines d'excitation électromagnétique (9),
- un premier et un deuxième capteur à effet Hall seulement, lesdits capteurs à effet Hall (17, 17') étant configurés pour détecter des positions angulaires prédéterminées du rotor,
- un circuit imprimé (21) sur lequel sont disposés le premier et le deuxième capteur à effet hall (17 et 17'), les deux capteurs à effet Hall (17 et 17') étant espacés de sorte que l'angle entre les droites (Δ et Δ') passant par le centre de l'aimant de commande (19) et respectivement le premier capteur à effet Hall (17) et le deuxième capteur à effet Hall (17') est supérieur ou égal à 10°,
le procédé comprenant :
- une étape préliminaire (101) de détermination d'une séquence prédéterminée de signaux d'excitation à appliquer aux bobines (9) en fonction de la position du rotor (3) pour entraîner le rotor (3) en rotation,
- une étape (102) de détermination des instants de commutation des signaux d'excitation à partir du signal fourni par l'un des capteurs à effet Hall (17, 17'),
- une étape (103) de détermination du sens de rotation du rotor (3) à partir des signaux fournis par les capteurs à effet Hall (17, 17'),
- une étape (104) d'application d'une séquence prédéterminée de signaux d'excitation en fonction des instants de commutation déterminés,
**caractérisé en ce que** l'aimant de commande (19) et les premier et deuxième capteurs à effet Hall (17 et 17') sont configurés de manière à ce que les changements d'état desdits premier et deuxième capteurs à effet Hall (17 et 17') se produisent respectivement avant et après l'instant de commutation des signaux d'excitation et à ce que la durée entre le changement d'état de l'un des capteurs à effet Hall (17, 17') et l'instant de commutation des signaux d'excitation soit égale à la durée entre l'instant de commutation des signaux d'excitation et le changement d'état de l'autre des capteurs à effet Hall (17', 17) lorsque le rotor (3) tourne à une vitesse constante et dans lequel les instants de commutation sont déterminés à partir du signal fourni par le capteur à effet Hall (17, 17') en avance par rapport à l'instant de commutation, le capteur à effet Hall (17', 17) en retard par rapport à l'instant de commutation étant utilisé, en combinaison du capteur à effet Hall (17, 17') en avance sur l'instant de commutation, pour déterminer le sens de rotation du rotor (3) au moment du démarrage.

## Patentansprüche

1. Bürstenloser Gleichstrom-Elektromotor (1), umfassend:
- einen Rotor (3), der Magnetelemente (5) umfasst, die um den Rotor (3) verteilt sind und Pole des Elektromotors (1) bilden, sowie einen Steuermagnet (19), der eine Anzahl von Polpaaren aufweist, die dem Dreifachen der Anzahl von Polpaaren des Elektromotors (1) entspricht,
- einen Stator (7) mit elektromagnetischen Erregerspulen (9), und eine Steuereinheit (14), die konfiguriert ist, um eine vorbestimmte Folge von Erregersignalen an die Spulen (9) in Abhängigkeit von der Position des Rotors (3) anzulegen, um den Rotor (3) in Drehung zu versetzen,
der Motor umfasst ferner:
- nur zwei Hall-Sensoren, nämlich einen ersten und einen zweiten Hall-Sensor, wobei die Hall-Sensoren (17, 17') konfiguriert sind, um vorbestimmte Winkelpositionen des Rotors zu erfassen,
der erste Hall-Sensor (17) und der zweite Hall-Sensor (17') sind auf einer Leiterplatte (21) angeordnet und beabstandet, sodass der Winkel zwischen den Geraden (Δ und Δ'), die durch den Mittelpunkt des Steuermagneten (19) und jeweils den ersten Hall-Sensor (17) und den zweiten Hall-Sensor (17') verlaufen, größer oder gleich 10° ist, und wobei der erste Hall-Sensor (17) verwendet wird, um die Schaltzeitpunkte der Erregersignale zu bestimmen, und der zweite Hall-Sensor (17') in Kombination mit dem ersten Hall-Sensor (17) verwendet wird, um die Drehrichtung des Rotors (3) beim Start oder zwischen dem ersten Hall-Sensor (17) und dem zweiten Hall-Sensor (17') zu bestimmen, **dadurch gekennzeichnet, dass** der Steuermagnet (19) und der erste und zweite Hall-Sensor (17, 17') so konfiguriert sind, dass die Zustandsänderungen des einen und des anderen der genannten ersten und zweiten Hall-Sensoren (17, 17') jeweils vor und nach dem Schaltzeitpunkt der Erregersignale auftreten und dass die Zeitdauer zwischen der Zustandsänderung eines der Hall-Sensoren (17, 17') und dem Schaltzeitpunkt der Erregersignale gleich der Zeitdauer zwischen dem Schaltzeitpunkt der Erregersignale und der Zustandsänderung des anderen der Hall-Sensoren (17', 17) ist, wenn der Rotor (3) mit konstanter Drehzahl dreht, und wobei der Hall-Sensor (17, 17'), der dem Schaltzeitpunkt vorauseilt, von der Steuereinheit (14) verwendet wird, um die Schaltzeitpunkte zu bestimmen, wobei der Hall-Sensor (17', 17), der dem Schaltzeitpunkt nacheilt, in Kombination mit dem dem Schaltzeitpunkt vorauseilenden Hall-Sensor (17, 17') verwendet wird, um die Drehrichtung des Rotors (3) beim Start zu bestimmen.

2. Elektromotor (1) nach dem vorhergehenden Anspruch, bei dem der Winkel zwischen den Geraden (Δ und Δ'), die durch den Mittelpunkt des Steuermagneten (19) und jeweils den ersten Hall-Sensor (17) und den zweiten Hall-Sensor (17') verlaufen, kleiner als 19° ist.

3. Elektromotor (1) nach dem vorhergehenden Anspruch, bei dem der Winkel zwischen den Geraden (Δ und Δ'), die durch den Mittelpunkt des Steuermagneten (19) und jeweils den ersten Hall-Sensor (17) und den zweiten Hall-Sensor (17') verlaufen, im Wesentlichen gleich 16° ist.

4. Getriebemotor, insbesondere für eine Wischvorrichtung, umfassend:
- einen Elektromotor (1) nach einem der vorhergehenden Ansprüche.

5. Verfahren zur Steuerung eines bürstenlosen Gleichstrom-Elektromotors (1), wobei der Elektromotor (1) umfasst:
- einen Rotor (3), der Magnetelemente (5) umfasst, die um den Rotor (3) verteilt sind und Pole des Elektromotors (1) bilden, sowie einen Steuermagnet (19), der eine Anzahl von Polpaaren aufweist, die dem Dreifachen der Anzahl von Polpaaren des Elektromotors (1) entspricht,
einen Stator (7) mit elektromagnetischen Erregerspulen (9),
nur einen ersten und einen zweiten Hall-Sensor, wobei die Hall-Sensoren (17, 17') konfiguriert sind, um vorbestimmte Winkelpositionen des Rotors zu erfassen,
eine Leiterplatte (21), auf der der erste und der zweite Hall-Sensor (17 und 17') angeordnet sind, wobei die beiden Hall-Sensoren (17 und 17') so beabstandet sind, dass der Winkel zwischen den Geraden (Δ und Δ'), die durch den Mittelpunkt des Steuermagneten (19) und jeweils den ersten Hall-Sensor (17) und den zweiten Hall-Sensor (17') verlaufen, größer oder gleich 10° ist,
das Verfahren umfassend:
einen vorbereitenden Schritt (101) zur Bestimmung einer vorbestimmten Folge von Erregersignalen, die an die Spulen (9) in Abhängigkeit von der Position des Rotors (3) anzulegen sind, um den Rotor (3) in Drehung zu versetzen,
einen Schritt (102) zur Bestimmung der Schaltzeitpunkte der Erregersignale anhand des von einem der Hall-Sensoren (17, 17') gelieferten Signals,
- einen Schritt (103) zur Bestimmung der Drehrichtung des Rotors (3) anhand der von den Hall-Sensoren (17, 17') gelieferten Signale,
einen Schritt (104) zur Anwendung einer vorbestimmten Folge von Erregersignalen in Abhängigkeit von den bestimmten Schaltzeitpunkten,
**dadurch gekennzeichnet, dass** der Steuermagnet (19) und der erste und zweite Hall-Sensor (17 und 17') so konfiguriert sind, dass die Zustandsänderungen der genannten ersten und zweiten Hall-Sensoren (17 und 17') jeweils vor und nach dem Schaltzeitpunkt der Erregersignale auftreten und dass die Zeitdauer zwischen der Zustandsänderung eines der Hall-Sensoren (17, 17') und dem Schaltzeitpunkt der Erregersignale gleich der Zeitdauer zwischen dem Schaltzeitpunkt der Erregersignale und der Zustandsänderung des anderen der Hall-Sensoren (17', 17) ist, wenn der Rotor (3) mit konstanter Drehzahl dreht, und wobei die Schaltzeitpunkte anhand des Signals des dem Schaltzeitpunkt vorauseilenden Hall-Sensors (17, 17') bestimmt werden, wobei der dem Schaltzeitpunkt nacheilende Hall-Sensor (17', 17) in Kombination mit dem dem Schaltzeitpunkt vorauseilenden Hall-Sensor (17, 17') verwendet wird, um die Drehrichtung des Rotors (3) beim Start zu bestimmen.

## Claims

1. Brushless direct current electric motor (1) comprising:
- a rotor (3) comprising magnetic elements (5) distributed around the rotor (3) forming poles of the electric motor (1) and a control magnet (19) comprising a number of pole pairs equal to three times the number of pole pairs of the electric motor (1),
- a stator (7) having electromagnetic excitation coils (9), and a control unit (14) configured to apply a predetermined sequence of excitation signals to the coils (9) as a function of the position of the rotor (3) to drive the rotor (3) in rotation,
the motor further comprises:
- only two Hall effect sensors, including a first and a second Hall effect sensor, said Hall effect sensors (17, 17') being configured to detect predetermined angular positions of the rotor,
the first Hall effect sensor (17) and the second Hall effect sensor (17') are arranged on a printed circuit board (21) and are spaced apart such that the angle between the lines (Δ and Δ') passing through the centre of the control magnet (19) and respectively the first Hall effect sensor (17) and the second Hall effect sensor (17') is greater than or equal to 10°, and wherein the first Hall effect sensor (17) is used to determine the switching instants of the excitation signals and the second Hall effect sensor (17') is used, in combination with the first Hall effect sensor (17), to determine the direction of rotation of the rotor (3) at the moment of starting or between the first Hall effect sensor (17) and the second Hall effect sensor (17'), **characterised in that** the control magnet (19) and the first and second Hall effect sensors (17, 17') are configured such that the state changes of each of said first and second Hall effect sensors (17, 17') occur respectively before and after the switching instant of the excitation signals and such that the duration between the state change of one of the Hall effect sensors (17, 17') and the switching instant of the excitation signals is equal to the duration between the switching instant of the excitation signals and the state change of the other Hall effect sensor (17', 17) when the rotor (3) rotates at a constant speed, and wherein the Hall effect sensor (17, 17') that is ahead of the switching instant is used by the control unit (14) to determine the switching instants, the Hall effect sensor (17', 17) that is behind the switching instant being used, in combination with the Hall effect sensor (17, 17') that is ahead of the switching instant, to determine the direction of rotation of the rotor (3) at the moment of starting.

2. Electric motor (1) according to the preceding claim, wherein the angle between the lines (Δ and Δ') passing through the centre of the control magnet (19) and respectively the first Hall effect sensor (17) and the second Hall effect sensor (17') is less than 19°.

3. Electric motor (1) according to the preceding claim, wherein the angle between the lines (Δ and Δ') passing through the centre of the control magnet (19) and respectively the first Hall effect sensor (17) and the second Hall effect sensor (17') is substantially equal to 16°.

4. Gear motor, in particular for a wiping device, comprising:
- an electric motor (1) according to one of the preceding claims.

5. Method for controlling a brushless direct current electric motor (1), said electric motor (1) comprising:
- a rotor (3) comprising magnetic elements (5) distributed around the rotor (3) forming poles of the electric motor (1) and a control magnet (19) comprising a number of pole pairs equal to three times the number of pole pairs of the electric motor (1),
a stator (7) having electromagnetic excitation coils (9),
a first and a second Hall effect sensor only, said Hall effect sensors (17, 17') being configured to detect predetermined angular positions of the rotor,
a printed circuit board (21) on which the first and second Hall effect sensors (17 and 17') are arranged, the two Hall effect sensors (17 and 17') being spaced apart such that the angle between the lines (Δ and Δ') passing through the centre of the control magnet (19) and respectively the first Hall effect sensor (17) and the second Hall effect sensor (17') is greater than or equal to 10°,
the method comprising:
a preliminary step (101) of determining a predetermined sequence of excitation signals to be applied to the coils (9) as a function of the position of the rotor (3) to drive the rotor (3) in rotation,
a step (102) of determining the switching instants of the excitation signals from the signal provided by one of the Hall effect sensors (17, 17'),
- a step (103) of determining the direction of rotation of the rotor (3) from the signals provided by the Hall effect sensors (17, 17'),
a step (104) of applying a predetermined sequence of excitation signals as a function of the determined switching instants,
**characterised in that** the control magnet (19) and the first and second Hall effect sensors (17 and 17') are configured such that the state changes of said first and second Hall effect sensors (17 and 17') occur respectively before and after the switching instant of the excitation signals and such that the duration between the state change of one of the Hall effect sensors (17, 17') and the switching instant of the excitation signals is equal to the duration between the switching instant of the excitation signals and the state change of the other Hall effect sensor (17', 17) when the rotor (3) rotates at a constant speed, and wherein the switching instants are determined from the signal provided by the Hall effect sensor (17, 17') that is ahead of the switching instant, the Hall effect sensor (17', 17) that is behind the switching instant being used, in combination with the Hall effect sensor (17, 17') that is ahead of the switching instant, to determine the direction of rotation of the rotor (3) at the moment of starting.
